# EUROPEAN PATENT APPLICATION

(11) **EP 4 329 125 A1**
(43) Date of publication of application: **28.02.2024**
(21) Application number: 22191511.9
(22) Date of filing: 22.08.2022
(51) Int. Cl.: H02J 3/00

(54) **ELECTRONIC FILTER DEVICE FOR AN ELECTRICAL CIRCUIT AS WELL AS A METHOD FOR CONTROLLING AN ELECTRONIC FILTER DEVICE**

(71) Applicant: Siemens Aktiengesellschaft, 80333 München (DE)
(72) Inventor: Krupp, Henrik, 91056 Erlangen (DE); Mondal, Gopal, 91058 Erlangen (DE); Nielebock, Sebastian, 91301 Forchheim (DE); Sirtl, Jennifer, 90763 Fürth (DE)
(74) Representative: Siemens Patent Attorneys

(57) **Abstract**

The invention relates to an electronic filter device (16) for an electrical circuit (10), wherein the electrical circuit (10) is connected to an alternate current grid (12) and to a active load (14), wherein between the active load (14) and the electrical circuit (10) a current rectifier (18) is connected, and wherein the electronic filter device (16) is an active filter device (26) for filtering signal noise (28) in the electrical circuit (10) from the active load (14), wherein the active filter device (26) is additionally connected to a ground (30) of the electrical circuit (10), and the active filter device (26) comprises a controller (32) to modify the filtering with an information of a common mode current in the electrical circuit (10). Furthermore, the invention relates to an electrical circuit (10) as well as to a method for controlling the electronic filter device (16).

## Description

The invention relates to an electronic filter device for an electric circuit, wherein the electrical circuit is connected to an alternate current grid and to an active load, wherein between the active load and the electrical circuit a current rectifier is connected, and wherein the electronic filter device is an active filter device for filtering signal noise in the electrical circuit from the rectifier. Furthermore, the invention relates to an electrical circuit as well as to a method for controlling the electronic filter device.

Passive filters are used in parallel or series to an active load, to fulfill the grid code at the grid terminal. The standard practice is to use passive filter in series with the active load but the performance of the passive filter may degrade when the source of the noise is at the outside of the converter and not considered during the design of the passive filter. An active filter can be a superior choice in this case, as the active filter can take care of any noises as long as it is within its measurement bandwidth and the response dynamic of the active filter. The other advantage with the active filter is that the total loss in the system goes down as the active filter with the high switching frequency does not deal with actual load current like the active load which is the case with traditional series connected input filters. Active filters are very beneficial for lowfrequency-noise, wherein passive filters would get very huge in this context to fulfill the grid standards.

But usually, the active filters deal with the differential mode noise. So eventually the common mode noise (CM noise) is still dealt with the passive filter even so the active filter is in operation.

It is an object of the invention to provide an electronic filter device, an electrical circuit as well as a method for controlling an electronic filter device, by which a common mode noise may be filtered in an efficient way.

This object is solved by an electronic filter device, an electrical circuit as well as to a method for controlling an electronic filter device according to the independent claims. Advantageous forms of configurations are presented in the dependent claims.

One aspect of the invention relates to an electric filter device for an electrical circuit, wherein the electrical circuit is connected to an alternate current grid and to an active load, wherein between the active load and the electrical circuit a current rectifier is connected, and wherein the electronic filter device is an active filter device for filtering signal noise in the electrical circuit from the active load.

In an embodiment, the active filter device is additionally connected to a ground of the electrical circuit, and the active filter device comprises a controller to modify the filtering with an information of a common mode current in the electrical circuit.

Therefore, a modification for the active filter device is provided to alleviate the limitation of the active filter according to the state of the art. An additional control and a minor construction are added to the active filter in order to add the feature of common mode noise reduction capability.

The active filter device is in particular a converter built with power semiconductors and may only provide reactive power. It is connected to capacities. The topology of an active filter device can be different. It can be for example a standard 2L/3L AC to DC converter for low voltage application, or it can be a modular type for high voltage & high-power applications.

In particular a modular type of the active filter device is provided. The modular active filter device may be built using a series of connection of h-bridges modules. For example, for a three-phase case there is a neutral point (N) created by joining the phases at the start point. The common mode noise generated by the active load and the active filter device flows to the alternate current grid through the parasitic capacitator from the different part of the converters to the common ground. The amplitude of the common mode noise depends on voltage rating, control and also on the construction of the electrical circuit. The proposal here is to add one dedicated capacitor from the neutral point of the active filter device to the common ground, which will create a dedicated path for the common mode noise to the ground and the controller of the active filter device may make sure that the common mode noise remains within the converter assembly, reducing the necessity of a large common mode choke device. The proposal is to connect an additional common mode capacitor from the neutral point of the active filter device to the common ground. This additional common mode capacitor creates a parallel path through the parasitic capacitors of the different parts of the circuit. The additional path created by the common mode capacitor may trap most of the common mode noise to the grid. In order to achieve this performance, the controller for the active filter device is needed to be modified with the information of the common mode current. The advantage here is, that the existing current sensors of the rectifier circuit may be used for this purpose.

In particular, the known solutions for the active filter devices for differential mode noise reduction and the power factor correction is augmented. In particular, in this invention there is an augmented active filter device of the filtering by adding the feature of common mode noise reduction. By doing so, the active filter device does not only help to fulfill the grid-code in the known way, but it also helped to reduce the common mode noise. The technical advantage is significant due to the fact, that the high-power-active loads often deal with low switching frequencies, often single kHz or below, and the corner-frequency of the common mode filter stage has to be in the range of the switching frequency. This makes the common mode-filters for high-power applications expensive, large in volume and often adds significant losses to the system. Using the active filter device in the way of the invention, reduces this requirement of large filter heavily. The shown invention may in many cases be used without changes to the hardware of the active filter devices. By modifying the firmware of the controller in the present way, the mentioned improvements may be achieved without additional costs per unit.

According to an embodiment, the active filter device comprises at least a cascade of H-bridges. In particular, therefore an easy way of active filtering is provided. The cascade of H-bridges may comprise a plurality of MOSFETs for switching and filtering. In particular, the active filter device comprises a serial connection of H-bridges modules. In particular, the three-phase modular active filter device may comprise at least three H-bridges.

According to another embodiment, depending on the information of the common mode noise the pulse width modulator for controlling the H-bridges is adapted for filtering. In particular, the H-bridges are controlled by a pulse width signal (PWS). Depending on the information, the pulse width signal is now adapted in order to trap the common mode noise in the path of the connection between the neutral point and the ground.

In another embodiment, a signal noise from a diode rectifier as the rectifier is filtered by the electronic filter device. In particular, the active load may be for example a load coming from an energy source, for example like a hydrogen source. The diode rectifier is an easy rectifier in order to rectify the sinusoidal AC voltage to DC voltage.

Another embodiment describes that the sinusoidal signal from the rectifier is filtered by the electronic filter device. In particular, the rectifier may produce a three-phase sinusoidal signal, in order to provide electric energy from the active load, for example a DC (direct current) current load to the alternate current (AC) grid. Another example may be a self-commutated high-power converter. In particular this sinusoidal signal may be filtered with the electronic filter device in order to reduce the noise inside the electrical circuit.

In another embodiment the controller is connected to at least one current sensor of the alternate current grid, wherein the information for the common mode current is detected by the current sensor. In particular, the alternate current grid comprises the current sensor, which is standardized. This current sensor may be used to get the information for the common mode current. Therefore, the electronic filter device does not need to have an own current sensor. Therefore, the electronic filter device is provided with less parts.

In another embodiment the electronic filter device comprises a further current sensor for sensing the current in the electronic filter device. In particular, the signal from the further current sensor may be used for controlling the filtering. Therefore, an effective filtering process is realized.

In another embodiment, the electronic filter device is connected in parallel to the alternate current grid and the active load. Therefore, an effective way for reducing the common mode noise is presented by connecting the electronic filter device parallel to the alternate grid and the active load.

In another embodiment, the electronic filter device is connected to a voltage sensor of the electrical circuit. Therefore, an efficient way for filtering the common mode noise depending on the voltage inside the electrical circuit, is realized.

According to another embodiment depending on a bandwidth of a current sensor of the alternate grid, a switching frequency of the active filter device is controlled. The advantage here is that the existing current sensors may be used for this purpose. Depending on the switching frequency, the current sensors bandwidth needs to be chosen for this purpose.

In another embodiment, between the active filter device and the ground a capacitor is connected. This capacitor may be the so-called common mode capacitor. This additional common mode capacitor is connected from the neutral point N of the active filter device to the common ground. This additional capacitor creates a parallel pass through the parasitic capacities of the different parts of the circuit. The additional path created by the common mode capacitor traps most of the common mode noise to the grid.

Another aspect of the invention relates to an electrical circuit connected to an alternate current grid and to a active load, wherein the electrical circuit comprises at least an electronic filter device according to the preceding aspect.

According to an embodiment of the electrical circuit, the active load is generated by an energy resource. The energy source may be for example hydrogen source. In particular the energy resource may be for example an AC/DC self-commutated converter.

A still further aspect of the invention relates to a method for controlling an electronic filter device according to the preceding aspect, wherein the active filter device is additionally connected to a ground of an electrical circuit, and the active filter device is controlled by a controller such that the filtering is modified by an information of a common mode current in the electrical grid.

According to an embodiment of the method, the filtering is modified by using a proportional controller.

Advantageous forms of the electronic filter device may be regarded to as advantageous forms of the electrical circuit as well as to the method. In particular, the electronic filter device as well as the electrical circuit comprises means for performing the method.

For use cases or use situations which may arise in the method, and which are not explicitly described here, it may be provided that, in accordance with the method, an error message and/or a prompt for user feedback is output and/or a default setting and/or a predetermined initial state is set.

The invention is now described according to the figures.

Therefore:
- Fig. 1: shows a schematic block diagram according to an embodiment of the electrical circuit; and
- Fig. 2: shows another schematic block diagram according to an embodiment of an electronic filter device.

In the figures the same elements comprise the same reference signs.

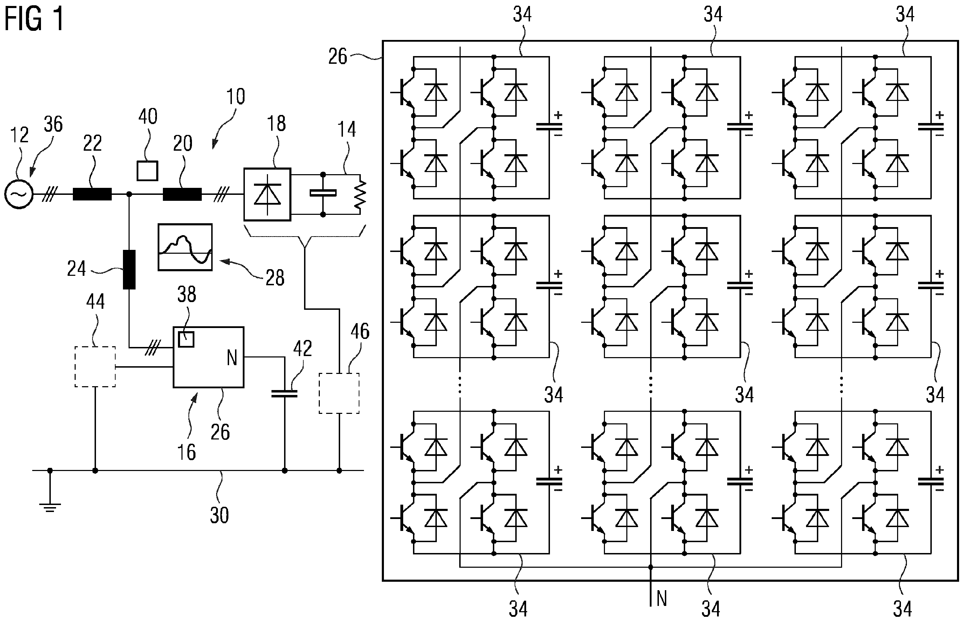

Fig. 1 shows a schematic block diagram according to an embodiment of an electrical circuit 10. The electrical circuit 10 is connected to an alternate current grid 12 and to a active load 14, wherein the electrical circuit 10 comprises at least an electronic filter device 16. In particular, the active load 14 may be generated by an energy source.

Furthermore, Fig. 1 shows, that the active load 14 is connected via a rectifier 18 to the alternate current grid 12. In particular, the rectifier 18 is shown in this embodiment as a diode rectifier 18. The rectifier 18 may also be configured as IGBT-rectifier or as a thyristor rectifier. Furthermore, it is shown, that the electrical circuit 10 is in particular a three-phase circuit 10. Therefore, the electrical circuit 10 comprises a first line inductor 20 as well as a second line inductor 22. Furthermore, an active filter series inductor 24 is shown.

Fig. 1 shows further that the electronic filter device 16 is an active filter device 26 for filtering signal noise 28 in the electrical circuit 10.

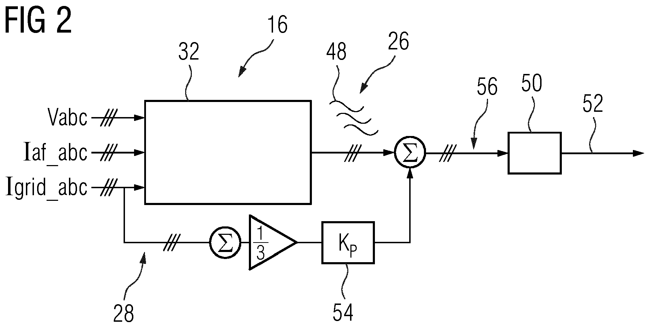

According to an embodiment, the active filter device 26 is additionally connected to a ground 30 of the electrical circuit 10, and the active filter device 26 comprises a controller 32 (Fig. 2) to modify the filtering with an information of a common mode current, which represented by the current I_{grid_abc} (Fig. 2), wherein the current I_{grid_abc} is used to calculate the common mode current by sum it up and divide it by 3, in the electrical circuit 10.

Fig. 1 shows further an enlarged view of the active filter device 26, wherein it is shown, that the active filter device 26 comprises a cascade of H-bridges 34.

In particular Fig. 1 shows, that a non-sinusoidal signal from the rectifier 18 is filtered by the electronic filter device 16. Furthermore, the controller 32 may be connected to a current sensor 36 of the alternate current grid 12, wherein the information for the common mode current is detected by the current sensor 36. Furthermore, the electronic filter device 16 may comprise a further current sensor 38 for sensing the current in the electronic filter device 16. Fig. 1 shows further that the electronic filter device 16 is connected parallel to the alternate current grid 12 and the active load 14.

Furthermore, the electronic filter device 16 may comprise a voltage sensor or is connected to a voltage sensor 40 of the electrical circuit 10.

Furthermore, Fig. 1 shows, that between the active filter device 26 and the ground 30 a capacitor 42 is connected. Fig. 1 shows further that a first parasitic capacitance 44 to the ground 30 of the active filter device 26 is presented as well as a second parasitic capacitor 46 from the active load 14 to the ground 30 is presented.

In particular Fig. 1 shows, that the active filter device 26 is a converter built with power semiconductors and may only provide reactive power as it is not connected to any power source. It is connected to capacitors. The topology of the active filter device 26 may be different. It can be a standard 2L/3L AC to DC converter for low voltage application, or it can be a modular type for high voltage application.

The first concept proposed here is a modular type active filter device 26. The modular active filter device 26 comprises in series connection of the H-bridges 34 modules. For a three-phase case there is a neutral point N created by joining the start point of the three phases as shown in Fig. 1. The common mode noise 28 generated by the active load 14 and the active filter device 26 flows to the alternate current grid 12 through the parasitic capacitance 46 from a different part of the converters to the common ground 30. The amplitude of the common mode noise 28 depends on manufacturers including the construction of the electrical circuit 10. The proposal here is to add one dedicated capacitor 42 from the neutral point N of the active filter device 26 to the common ground 30, which will create a dedicated pass for the common mode noise 28 to the ground 30 and the controller of the active filter element 26 make sure the common mode noise 28 remains within the converter assembly, reducing the necessity of a large common mode choke. The proposal is to connect the additional common mode capacitor 42 from the neutral point N to the active filter device 26 to the common ground 30. This additional capacitor 42 creates a parallel pass through the parasitic capacitance 44, 46 of the different parts of the electrical circuit 10. The additional path created by the capacitor 42 traps most the common mode noise 28 to the alternate current grid 12.

Fig. 2 shows a schematic block diagram according to an embodiment of the electronic filter device 16, in particular of the active filter device 26. Fig. 2 shows, that a voltage V_{abc} measured by the voltage sensor 40 is used by the controller 32. Furthermore, a current I_{af_abc} from the further current sensor 38 as well as a current I_{grid_abc} coming from the current sensor 36 is used.

In order to achieve the performance to trap the most of the common mode noise 28 to the alternate current grid 12, the controller 32 for the active filter device 26 is needed to be modified with the information of the common mode current. The advantage here is that the existing current sensor 36 can be used for this purpose. Depending on the switching frequency, the current sensor's bandwidth need to be chosen for this purpose. Fig. 2 shows the proposed controller 32 modification to achieve the reduction of the common mode noise 28. The three-phase grid current is used to calculate the common mode noise 28.

The output of the standard active filter controller 32 produces a three-phase sinusoidal reference signal 48, which is used for a pulse width modulation controller 50 to generate gate pulses 52 for the H-bridges 34. The estimated common noise signal 28 is used through a proportional controller 54 to modify the reference signal 48 to a modified sinusoidal reference signal 56.

The proposed concept may help the reduction of the common mode filter effort, reduction of size and cost of the whole system. Since the active filter device 26 does not deal with the load current, this addition does not increase any significant losses.

### Reference sign list

- 10: electrical circuit
- 12: alternate current grid
- 14: active load
- 16: electronic filter device
- 18: rectifier
- 20: first line inductor
- 22: second line inductor
- 24: active filter series inductor
- 26: active filter device
- 28: noise
- 30: ground
- 32: controller
- 34: h-bridges
- 36: current sensor
- 38: further current sensor
- 40: voltage sensor
- 42: capacitor
- 44: first parasitic capacitance
- 46: second parasitic capacitor
- 48: sinusoidal reference signal
- 50: pulse width modulation controller
- 52: gate pulses
- 54: proportional controller
- 56: modified sinusoidal reference signal
- I_{grid_abc}: current
- I_{af_abc}: current
- V_{abc}: voltage

## Claims

1. Electronic filter device (16) for an electrical circuit (10), wherein the electrical circuit (10) is connected to an alternate current grid (12) and to an active load (14), wherein between the active load (14) and the electrical circuit (10) a current rectifier (18) is connected, and wherein the electronic filter device (16) is an active filter device (26) for filtering signal noise (28) in the electrical circuit (10) from the rectifier (18),
**characterized in that**,
the active filter device (26) is additionally connected to a ground (30) of the electrical circuit (10), and the active filter device (26) comprises a controller (32) to modify the filtering with an information of a common mode current in the electrical circuit (10).

2. Electronic filter device (16) according to claim 1, **characterized in that**
the active filter device (26) comprises at least a cascade of H-bridges (34).

3. Electronic filter device (16) according to claim 2, **characterized in that**
depending on the information of the common mode noise (28) a pulse width signal for controlling the H-bridges (34) is adapted for filtering.

4. Electronic filter device (16) according to any of claim 1 to 3,
**characterized in that**
a signal noise (28) from a diode rectifier (18) as the rectifier (18) is filtered by the electronic filter device (16).

5. Electronic filter device (16) according to any of claim 1 to 4,
**characterized in that**
a non-sinusoidal signal from the rectifier (18) is filtered by the electronic filter device (16).

6. Electronic filter device (16) according to any of claim 1 to 5,
**characterized in that**
the controller (32) is connected to a current sensor (36) of the alternate current grid (12), wherein the information for the common mode current is detected by the current sensor (36) .

7. Electronic filter device (16) according to any of claim 1 to 6,
**characterized in that**
the electronic filter device (16) comprises at least one further current sensor (38) for sensing the current in the electronic filter device (16).

8. Electronic filter device (16) according to any of claim 1 to 7,
**characterized in that**
the electronic filter device (16) is connected parallel to the alternate current grid (12) and the active load (14).

9. Electronic filter device (16) according to any of claim 1 to 8,
**characterized in that**
the electronic filter device (16) is connected to a voltage sensor (40) of the electrical circuit (10).

10. Electronic filter device according to any of claim 1 to 9,
**characterized in that**
depending on a band width of a current sensor (36) of the alternate current grid (12) a switching frequency of the active filter device (26) is controlled.

11. Electronic filter device (16) according to any of claim 1 to 10,
**characterized in that**
between the active filter device (26) and the ground (30) a capacitor (42) is connected.

12. Electrical circuit (10) connected to an alternate current grid (12) and to an active load (14), wherein the electrical circuit (10) comprises at least an electronic filter device (16) according to any one of claims 1 to 11.

13. Electrical circuit (10) according to claim 12, **characterized in that**
the active load (14) is generated by an energy source.

14. Method for controlling an electronic filter device (16) according to any one of claims 1 to 11, wherein electronic filter device (16) is additionally connected to a ground (30) of an electrical circuit (10), and electronic filter device (16) is controlled by a controller (32) such that the filtering is modified by an information of a common mode current in the electrical circuit (10).

15. Method according to claim 14,
**characterized in that**
the filtering is modified by using a proportional controller.
